# DEMANDE DE BREVET EUROPEEN

(11) **EP 1 318 494 A1**
(43) Date de publication de la demande: **11.06.2003**
(21) Numéro de dépôt: 01870265.4
(22) Date de dépôt: 30.11.2001
(51) Int. Cl.: G09B 21/00, G09B 19/00

(54) **Symboles tactiles pour la reconnaissance de couleur par les aveugles et les malvoyants**

(71) Demandeur: Hyper Tactile Colour Code ASBL, 1410 Waterloo (BE)
(72) Inventeur: Vankrinkelveldt, Marc, 1652 Alsemberg (BE)
(74) Mandataire: Quintelier, Claude

(57) **Abrégé**

L'invention concerne un procédé pour appliquer une forme géométrique sur un support, selon lequel l'on choisit ladite forme parmi un ensemble de formes géométriques, chacune étant associée à une seule couleur prédéterminée et l'on applique en relief sur ledit support un ensemble de signes ponctuels constituant ladite forme, pour permettre une perception tactile de la couleur associée à ladite forme.

## Description

La présente invention se rapporte à un procédé pour appliquer une forme géométrique sur un support.

Il est connu d'appliquer sur un support, en particulier notamment de papier, des moyens permettant à des personnes non voyantes de percevoir par le toucher des signes représentatifs de la parole et de la pensée. Ces signes forment un code nommé écriture Braille et correspondent aux lettres de l'alphabet latin, permettant dès lors de former des mots. Chaque mot écrit au moyen de l'écriture Braille est donc composé d'un nombre de signe correspondant aux lettres du mot équivalent de l'écriture latine. Un signe de l'écriture Braille est obtenu à partir de trois rangées de deux points superposées. Chaque signe est composé en faisant saillir dans un support un à six desdits points.

Bien que l'écriture Braille soit aujourd'hui très répandue et permette à de nombreuses personnes mal ou non voyantes de lire et d'écrire, son apprentissage demande un entraînement long et elle n'est pas conçue pour permettre la perception de sensations visuelles telles que celle de couleurs. Certes, il est possible d'indiquer une couleur grâce à l'écriture Braille, en composant au moyen des signes qu'elle comporte le mot désignant ladite couleur. Néanmoins, il sera nécessaire de décrypter le mot perçu par le toucher, c'est à dire connaître l'écriture Braille, pour savoir de quelle couleur il s'agit. Ceci peut s'avérer constituer un obstacle à l'appréhension de couleurs, en particulier par de jeunes enfants ou plus généralement par toute personne ignorante des nombreux signes composant l'écriture Braille. De plus, la composition du mot indicatif d'une couleur dans l'écriture Braille comprend plusieurs signes successifs et occupe dès lors une espace relativement important sur un support. Par conséquent, l'indication en écriture Braille des couleurs de différentes zones d'un dessin par exemple, dont les contours ont été représentés en relief, ou des couleurs des différentes zones d'une forme tridimensionnelle, peut poser un problème de manque d'espace dans les zones en question pour y faire figurer ladite indication.

La présente invention a pour objet de pallier les inconvénients susmentionnés de l'écriture Braille.

Elle consiste en un procédé pour appliquer sur un support une forme géométrique, selon lequel on choisit ladite forme parmi un ensemble de formes géométriques, chacune étant associée à une seule couleur prédéterminée et on applique en relief sur ledit support un ensemble de signes ponctuels constituant ladite forme, pour permettre une perception tactile de la couleur associée à ladite forme.

Le fait qu'une forme géométrique associée à une couleur soit utilisée selon l'invention présente plusieurs avantages. D'une part, une telle forme est simple à assimiler par des personnes ignorantes de l'écriture, qu'elle soit braille ou latine. D'autre part, l'utilisation d'une seule forme géométrique pour indiquer une couleur fait que cette forme peut occuper un espace réduit sur le support qui la porte. Ceci permet par exemple de faire figurer grâce au procédé selon l'invention la couleur d'un vêtement en relief sur son étiquette, parmi les autres informations portées par cette dernière. En outre, des combinaisons de formes géométriques simples associées à certaines couleurs peuvent être utilisées pour former d'autres formes géométriques associées à d'autres couleurs, éventuellement obtenues à partir de mélanges des couleurs auxquelles lesdites formes géométriques simples sont associées.

Par ailleurs, l'utilisation de signes ponctuels pour réaliser les formes géométriques dans le procédé selon l'invention permet une mise en oeuvre aisée de ce procédé puisque plusieurs formes géométriques différentes distinctes indicatives de différentes couleurs pourront être réalisées au moyen de la reproduction d'un même signe ponctuel. Le cas échéant, les signes ponctuels constituant une forme géométrique peuvent être équidistants.

Dans une forme préférée de réalisation de l'invention, on applique en relief la forme géométrique associée à une couleur sur une représentation d'un sujet sur le support pour permettre une perception tactile d'une couleur associée à cette représentation.

Ceci permet sur un sujet représenté par un dessin ou un objet tridimensionnel, de rendre perceptible par le toucher grâce au procédé selon l'invention la couleur de chaque zone du dessin ou de l'objet en question au sein même de la zone en question. Ainsi, une personne non voyante pourra percevoir par le toucher les couleurs d'une oeuvre d'art. Inversement, cette personne pourra réaliser une oeuvre d'art et rendre perceptible par le toucher grâce au procédé selon l'invention les couleurs associées à chaque zone de l'oeuvre. Ceci s'applique également au domaine du dessin technique ou industriel.

De préférence, on applique en relief sur le support l'ensemble de signes ponctuels constituant la forme géométrique associée à une couleur de manière telle que ses dimensions correspondent sensiblement à celles de la face antérieure de la dernière phalange d'un doigt humain.

De la sorte, une personne non voyante peut d'un seul contact de l'extrémité d'un doigt reconnaître une forme géométrique appliquée en relief sur un support et dès lors percevoir la couleur associer à cette forme.

Dans un mode particulier de mise en oeuvre du procédé selon l'invention, on applique les signes ponctuels constituant la forme géométrique associée à une couleur de sorte qu'ils soient séparés d'une distance infinitésimale.

Ainsi, il est possible d'appliquer des formes géométriques en relief sur un support sans que les signes ponctuels qui les composent soient discernables de sorte que la forme en question apparaisse au toucher comme uniforme, afin par exemple de l'associer à des couleurs particulières telles le noir, résultant de l'absence de toute couleur du spectre de la lumière visible ou le blanc, résultant de l'union de toute les couleurs du spectre de la lumière visible.

Selon un autre mode de mise en oeuvre du procédé selon l'invention, on applique en relief sur le support au moins un signe ponctuel en retrait de la forme géométrique associée à une couleur, indicatif de la nuance de la couleur en question.

De la sorte il est possible de manière aisée, à partir de signes ponctuels identiques à ceux pouvant composer ladite forme géométrique, d'indiquer si la couleur à laquelle cette forme est associée est d'une nuance claire ou foncée, sans risque de confusion de cette indication avec la forme géométrique elle-même.

Selon une autre forme préférée de mise en oeuvre du procédé selon l'invention, on applique en relief sur un support la forme géométrique associée à une couleur par impression.

La technique de l'impression, au moyen notamment de pointes emboutissant le support pour réaliser un signe ponctuel en relief est éprouvée et parfaitement maîtrisée et standardisée dans l'écriture Braille et peut utilement être adaptée au procédé selon l'invention.

Alternativement, la technique du papier dit "stéréo" peut également être employée. Selon cette technique, un motif est imprimé sur le papier en question au moyen d'encre alcoolique ou de résine et ledit papier est ensuite disposé sur un tambour mis en rotation sous une lampe chauffante. L'encre ou la résine interagit avec le papier sous l'effet de la chaleur et gonfle, donnant du relief au motif imprimé.

Dès lors, le matériau constituant le support du moyen qui selon l'invention permet une perception tactile d'une couleur est de préférence du papier.

Alternativement encore, on peut appliquer ladite forme sur le support par broderie ou par collage.

Ces techniques sont particulièrement adaptées à des utilisations du procédé selon l'invention au domaine textile, afin notamment de permettre aux non voyants de percevoir la couleur des vêtements qu'ils achètent.

Des détails concernant l'invention sont décrits ci-après faisant référence aux tableaux 1 à 6.

Ces tableaux donnent à titre d'exemple la représentation en deux dimensions de formes géométriques qui, lorsqu'elles sont appliquées en relief sur un support par le procédé selon l'invention, permettent à des personnes non voyantes de percevoir des couleurs par le toucher. Ils donnent également à titre d'exemple des dimensions possibles des formes géométriques en question. Les tableaux reprennent quatorze couleurs et des formes géométriques associées ainsi que, le cas échéant, l'indication des nuances claire ou foncée de ces couleurs. Il va de soi que d'autres couleurs que celles reprises dans les tableaux pourraient être associées lors de la mise en oeuvre du procédé selon l'invention, à d'autres formes géométriques.

Certaines couleurs dites complexes sont obtenues par le mélange d'autres couleurs dites fondamentales. C'est le cas notamment du vert, obtenu par mélange de jaune et de bleu ou du brun, obtenu par mélange de rouge, de noir et d'orange. Les tableaux montrent que les formes géométriques associées aux couleurs complexes en question peuvent elles aussi être obtenues par combinaison des formes géométriques associées aux couleurs simples dont le mélange donne la couleur complexe considérée. Ainsi, la forme géométrique associée au vert est le losange, obtenu par combinaison du triangle associé au jaune et des quatre angles du rectangle associé au bleu. De même, l'ellipse verticale associée au brun est obtenue par combinaison des cercles du noir et du rouge et du rectangle vertical de l'orange. De manière plus imagée, la forme géométrique associée à l'or, sorte de jaune, est obtenue par combinaison de deux triangles mis en opposition sur leurs pointes, le triangle étant la forme associée dans l'exemple donné, au jaune.

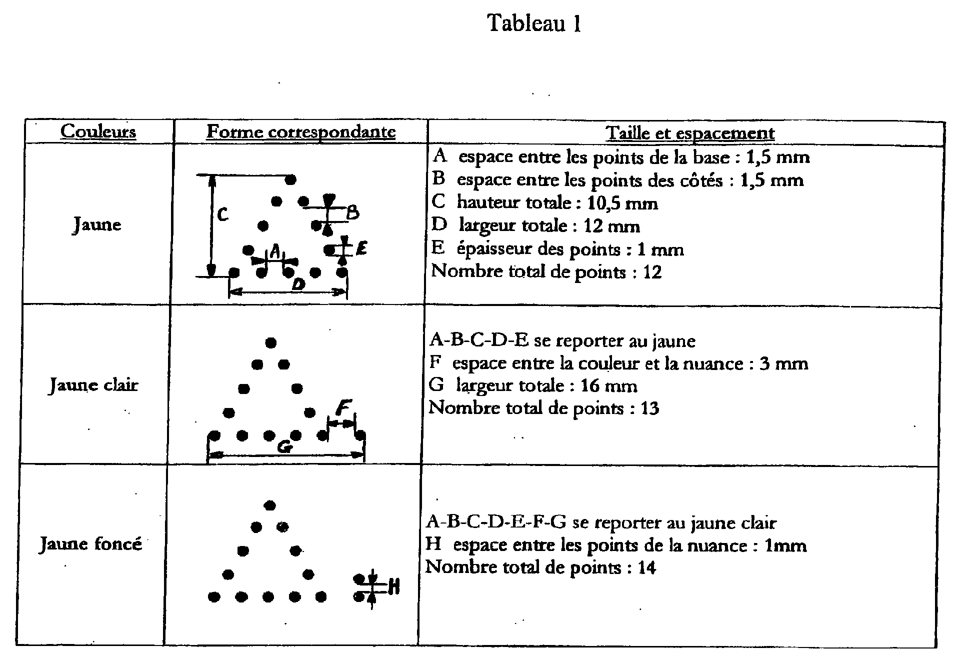

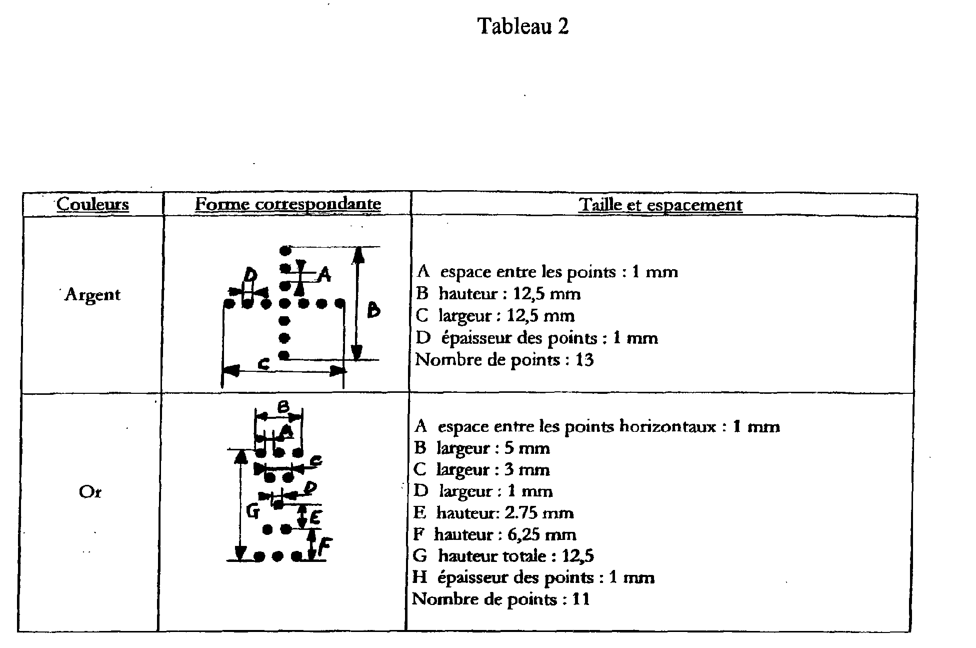

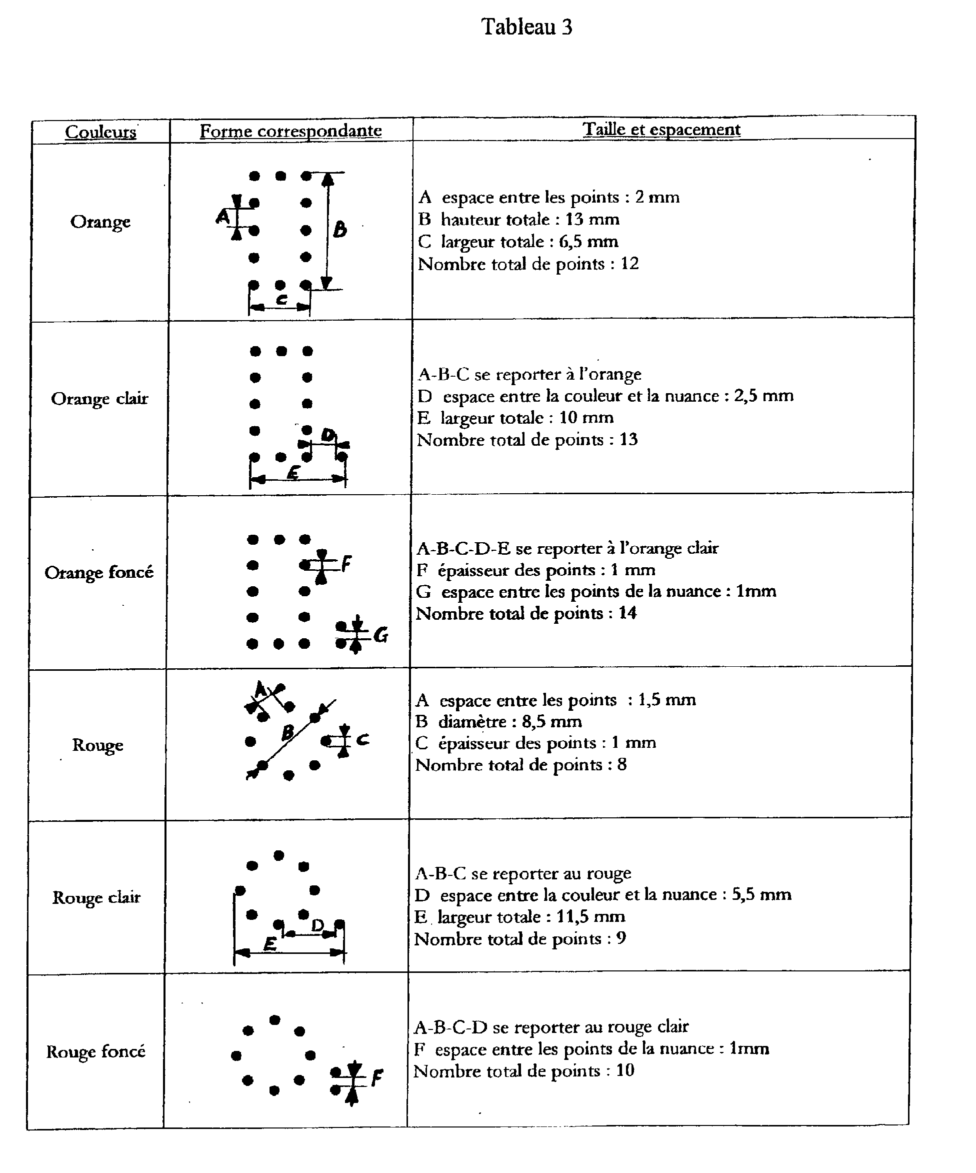

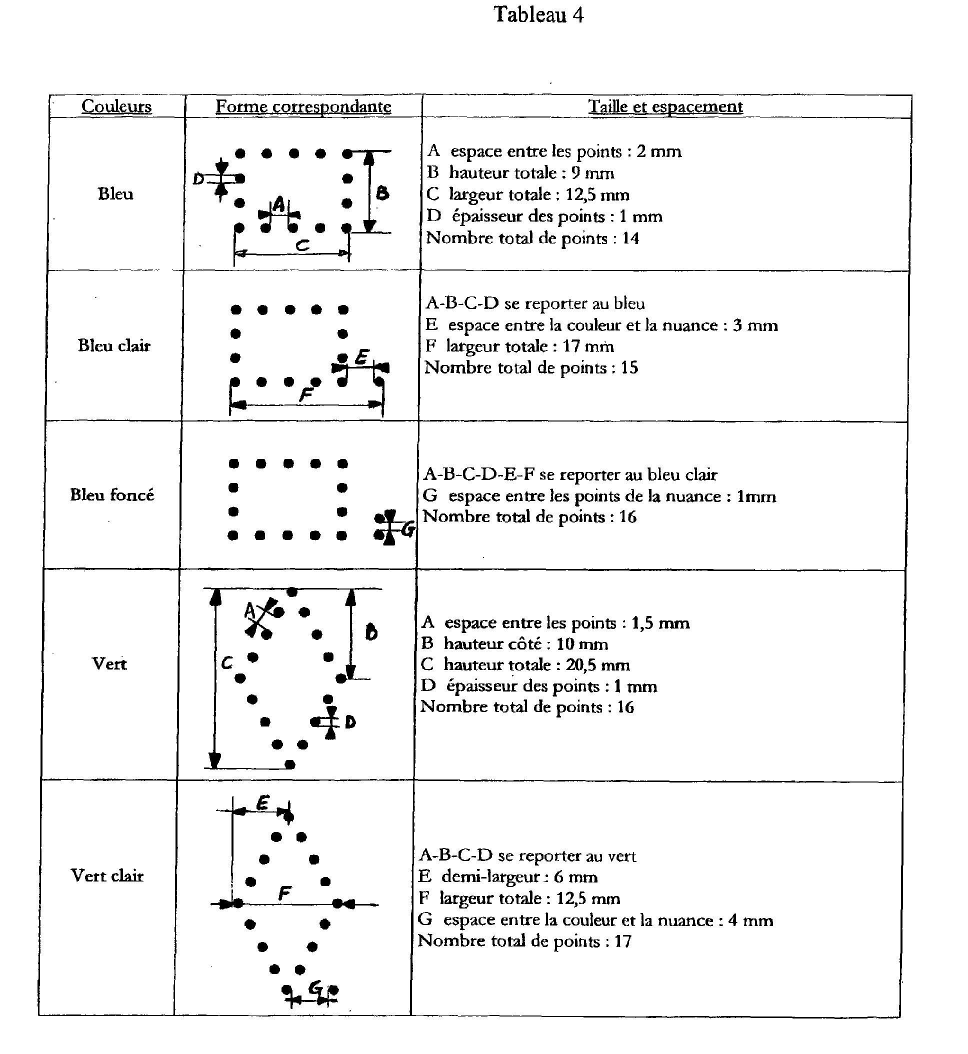

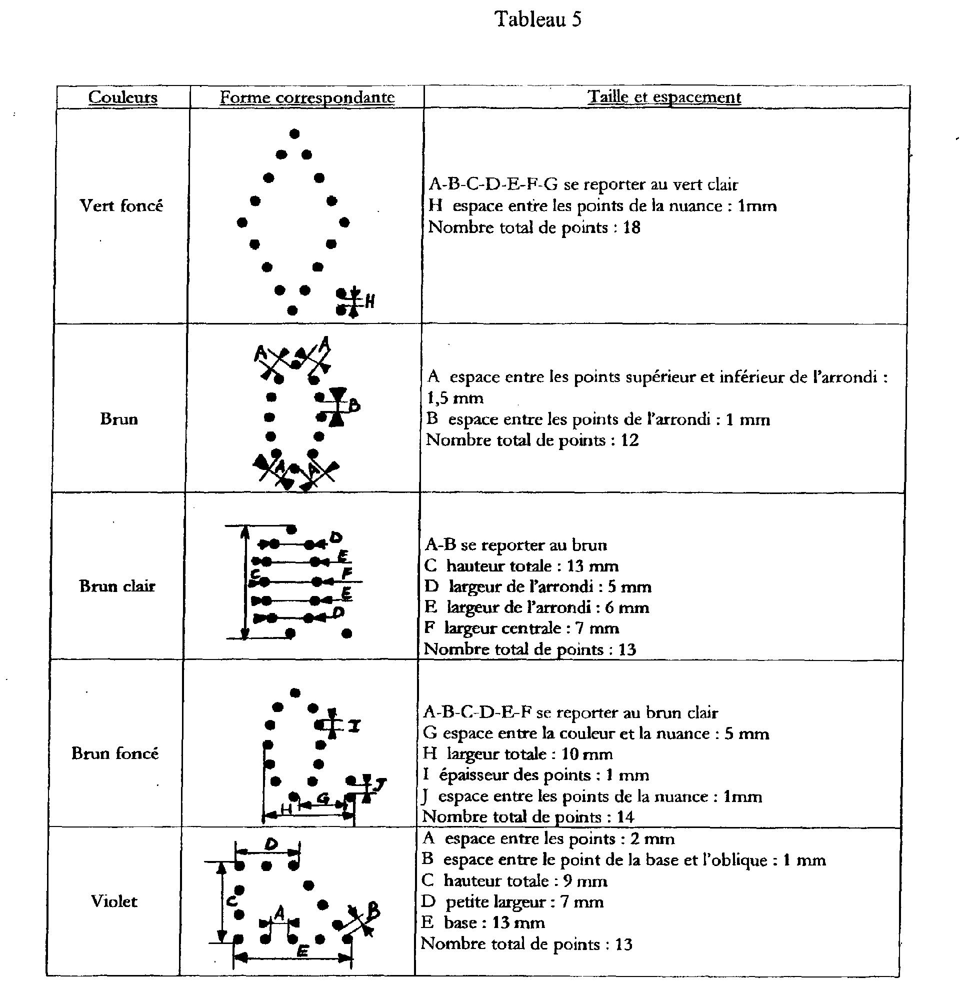

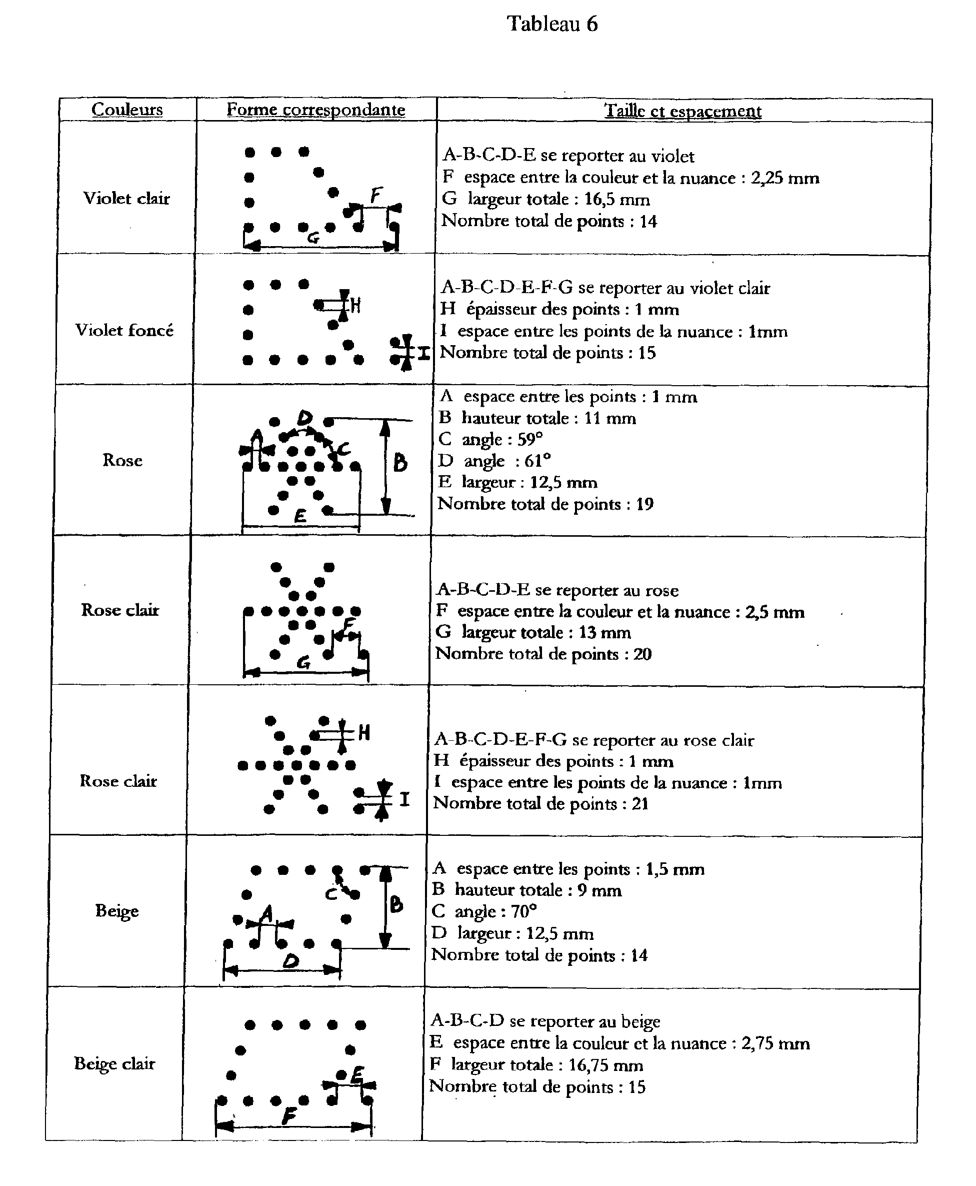

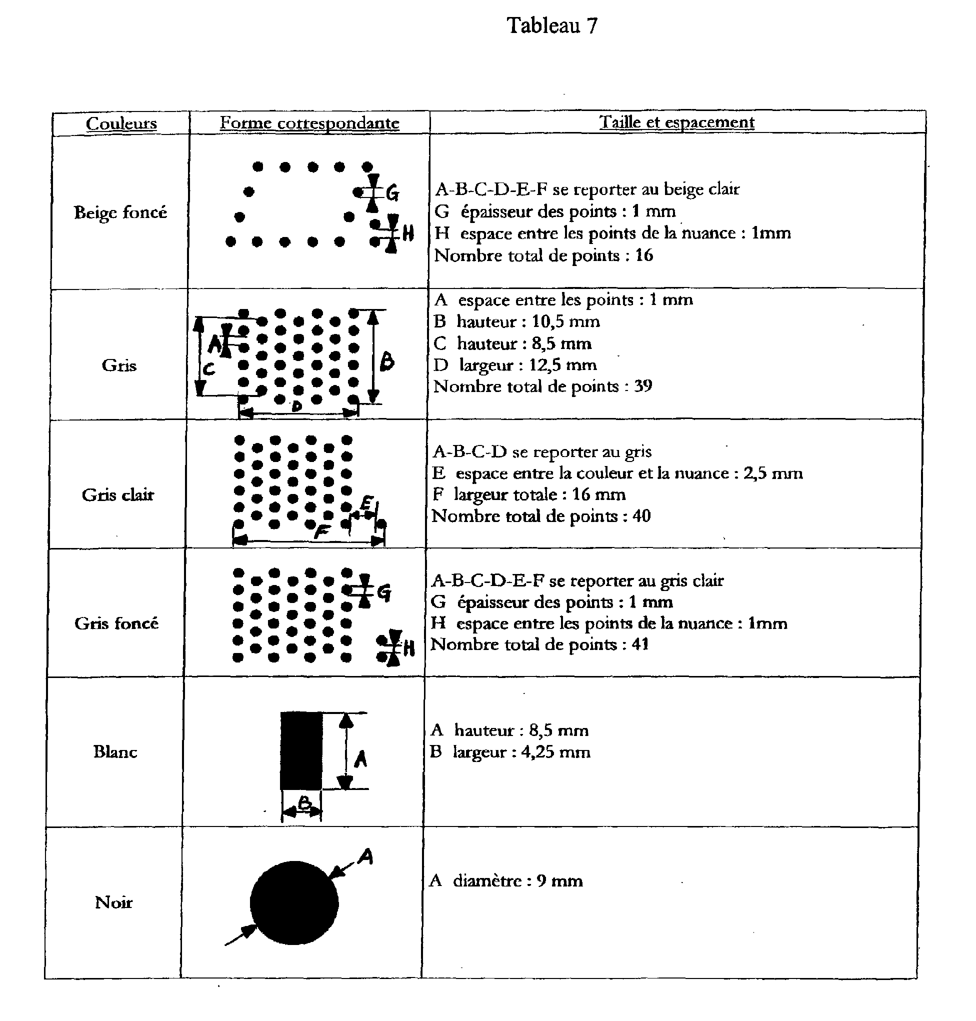

## Revendications

1. Procédé pour appliquer une forme géométrique sur un support, **caractérisé en ce que** l'on choisit ladite forme parmi un ensemble de formes géométriques, chacune étant associée à une seule couleur prédéterminée et **en ce que** l'on applique en relief sur ledit support un ensemble de signes ponctuels constituant ladite forme, pour permettre une perception tactile de la couleur associée à ladite forme.

2. Procédé selon la revendication 1 **caractérisé en ce que** l'on applique ladite forme sur la représentation d'un sujet sur ledit support pour permettre une perception tactile d'une couleur associée à ladite représentation.

3. Procédé selon l'une des revendications précédentes, dans lequel on applique en relief sur ledit support l'ensemble de signes ponctuels constituant ladite forme de manière telle que ses dimensions correspondent sensiblement à celles de la face antérieure de la dernière phalange d'un doigt humain.

4. Procédé selon l'une des revendications précédentes dans lequel on applique les signes ponctuels constituant ladite forme de sorte qu'ils soient séparés d'une distance infinitésimale.

5. Procédé selon l'une des revendications précédentes, dans lequel on applique en relief sur ledit support au moins un signe ponctuel en retrait de ladite forme, indicatif de la nuance de la couleur associée à cette forme.

6. Procédé selon l'une des revendications précédentes dans lequel on applique ladite forme sur ledit support par impression.

7. Procédé selon l'une des revendications 1 à 5 dans lequel on applique ladite forme sur ledit support par broderie.

8. Procédé selon l'une des revendications 1 à 5 dans lequel on applique ladite forme sur ledit support par collage.
